# EUROPEAN PATENT APPLICATION

(11) **EP 4 730 144 A1**
(43) Date of publication of application: **22.04.2026**
(21) Application number: 25209145.9
(22) Date of filing: 16.10.2025
(51) Int. Cl.: G06F 13/16, G06F 3/06

(54) **SYSTEMS AND METHODS FOR DATA ACCESS MANAGEMENT BASED ON PAIR CHECKING BETWEEN COMMAND QUEUES**

(30) Priority: 17.10.2024 US 202463708597 P; 23.04.2025 US 202519187922; 24.09.2025 KR 20250138474
(71) Applicant: Samsung Electronics Co., Ltd., Suwon-si, Gyeonggi-do 16677 (KR)
(72) Inventor: LEE, Youngsu, San Jose, CA, 95134 (US); LI, Zongwang, San Jose, CA, 95134 (US); KI, Yang Seok, San Jose, CA, 95134 (US)
(74) Representative: Kuhnen & Wacker Patent- und Rechtsanwaltsbüro PartG mbB

(57) **Abstract**

Provided are systems and methods for data access management. A method includes determining, by a device (300), that a first command in a first command queue (Q1) of the device (300) and a second command in a second command queue (Q2) of the device (300) are associated with a same address in a memory (230), the first command queue (Q1) being configured to store a command type different from that of the second command queue (Q2), determining that the first command has a priority of execution over the second command, sending, by the device (300), the first command to be executed, and placing, by the device (300), a hold on the second command, such that the second command is retained in the second command queue (Q2) based on the first command being executed.

## Description

### FIELD

Aspects of some embodiments of the present disclosure relate to systems and methods for data access management.

### BACKGROUND

In the field of computers, a computing system may include one or more hosts and one or more memory devices connected to (e.g., communicatively coupled to) the one or more hosts. Such computing systems have become increasingly popular, in part, for allowing many different users to share the computing resources of the system. Memory requirements have increased over time as the number of users of such systems and the number and complexity of applications running on such systems have increased.

The present background section is intended to provide context only, and the disclosure of any embodiment or concept in this section does not constitute an admission that said embodiment or concept is prior art.

### SUMMARY

Aspects of some embodiments of the present disclosure are directed to computing systems for improved data access management.

According to some embodiments of the present disclosure, there is provided a method for data access management, the method including determining, by a device, that a first command in a first command queue of the device and a second command in a second command queue of the device are associated with a same address in a memory, the first command queue being configured to store a command type different from that of the second command queue, determining that the first command has a priority of execution over the second command, sending, by the device, the first command to be executed, and placing, by the device, a hold on the second command, such that the second command is retained in the second command queue based on the first command being executed.

The method may further include sending, by the device, a third command from the second command queue to be executed, the third command being further back in the second command queue than the second command.

The sending the first command to be executed may include sending, by the device, the first command to a slave device via an on-chip communication-bus protocol, and the on-chip communication-bus protocol may be an advanced extensible interface (AXI) protocol.

The memory may include a volatile memory or a non-volatile memory, and the slave device may include a controller associated with one of the volatile or non-volatile memories.

The command type may be one of a read command or a write command.

The first command may include a first read command, the first command queue may include a read-command queue, the second command may include a first write command, and the second command queue may include a write-command queue.

The first command may include a first write command, the first command queue may include a write-command queue, the second command may include a first read command, and the second command queue may include a read-command queue.

The method may further include generating, by the device, priority information in a register, the register including an identifier for the first command and an identifier for the second command, wherein the determining that the first command has the priority of execution over the second command may include reading, by the device, the priority information from the register.

The method may further include determining, by the device, that a fourth command in the first command queue of the device and a fifth command in the second command queue of the device are also associated with the same address in the memory, and determining, by the device, that the first command and the second command have a higher priority of execution based on a field of a register, the register including information associating the fourth command with the fifth command.

The method may further include determining, by the device, that the first command and the second command are valid commands and generating a validity determination, wherein the device may perform the determining that the first command and the second command are associated with the same address based on the validity determination.

According to some other embodiments of the present disclosure, there is provided a system for data access management, the system including a bridge device connected to a master device and to a slave device, and a controller of the slave device communicatively coupled to the bridge device, wherein the bridge device is configured to perform determining that a first command in a first command queue of the bridge device and a second command in a second command queue of the bridge device are associated with a same address in a memory associated with the controller, the first command queue being configured to store a command type different from that of the second command queue, determining that the first command has a priority of execution over the second command, sending the first command to be executed, and placing a hold on the second command, such that the second command is retained in the second command queue based on the first command being executed.

The bridge device may be configured to perform sending a third command from the second command queue to be executed, the third command being further back in the second command queue than the second command.

The sending the first command to be executed may include sending, by the bridge device, the first command to the controller via an on-chip communication-bus protocol, and the on-chip communication-bus protocol may be an advanced extensible interface (AXI) protocol.

The command type may be one of a read command or a write command.

The memory may include a volatile memory or a non-volatile memory, and the controller may be associated with the volatile memory or the non-volatile memory.

The first command may include a first read command, the first command queue may include a read-command queue, the second command may include a first write command, and the second command queue may include a write-command queue.

The first command may include a first write command, the first command queue may include a write-command queue, the second command may include a first read command, and the second command queue may include a read-command queue.

The bridge device may be configured to perform generating priority information in a register, the register may include an identifier for the first command and an identifier for the second command, and the determining that the first command has the priority of execution over the second command may include reading the priority information from the register.

The bridge device may be configured to perform determining that a third command in the first command queue of the bridge device and a fourth command in the second command queue of the bridge device are also associated with the same address in the memory, and determining, by the bridge device, that the first command and the second command have a higher priority of execution based on a field of a register, the register including information associating the third command with the fourth command.

According to some other embodiments of the present disclosure, there is provided a system for data access management, the system including a processing circuit, and a memory storing instructions, which, based on being executed by the processing circuit, cause the processing circuit to perform determining that a first command in a first command queue and a second command in a second command queue are associated with a same address in a memory, the first command queue being configured to store a command type different from that of the second command queue, determining that the first command has a priority of execution over the second command, sending the first command to be executed, and placing a hold on the second command, such that the second command is retained in the second command queue based on the first command being executed.

### BRIEF DESCRIPTION OF THE DRAWINGS

Non-limiting and non-exhaustive embodiments of the present disclosure are described with reference to the following figures, wherein like reference numerals refer to like parts throughout the various views unless otherwise specified.
FIG. 1 is a block diagram depicting a system for data access management, according to some embodiments of the present disclosure.
FIG. 2A is a diagram depicting a method for pair checking between command queues, according to some embodiments of the present disclosure.
FIG. 2B is a diagram depicting pair check registers for performing the pair checking between command queues depicted in FIG. 2A, according to some embodiments of the present disclosure.
FIG. 3 is a block diagram depicting a method for data access management with operations for processing commands with no same-address pair and operations for processing commands with a same-address pair, according to some embodiments of the present disclosure.
FIG. 4 is a block diagram depicting a system for data access management with multiplexing and a write-data-buffer memory, according to some embodiments of the present disclosure.
FIG. 5 is a diagram depicting a method for data access management with determination operations for pair checking between command queues, according to some embodiments of the present disclosure.

Corresponding reference characters indicate corresponding components throughout the several views of the drawings. Skilled artisans will appreciate that elements in the figures are illustrated for simplicity and clarity, and have not necessarily been drawn to scale. For example, the dimensions of some of the elements, layers, and regions in the figures may be exaggerated relative to other elements, layers, and regions to help to improve clarity and understanding of various embodiments. Also, common but well-understood elements and parts not related to the description of the embodiments might not be shown to facilitate a less obstructed view of these various embodiments and to make the description clear.

### DETAILED DESCRIPTION

Aspects of the present disclosure and methods of accomplishing the same may be understood more readily by reference to the detailed description of one or more embodiments and the accompanying drawings. Hereinafter, embodiments will be described in more detail with reference to the accompanying drawings. The described embodiments, however, may be embodied in various different forms, and should not be construed as being limited to only the illustrated embodiments herein. Rather, these embodiments are provided as examples so that this disclosure will be thorough and complete, and will fully convey aspects of the present disclosure to those skilled in the art. Accordingly, description of processes, elements, and techniques that are not necessary to those having ordinary skill in the art for a complete understanding of the aspects and features of the present disclosure may be omitted.

Unless otherwise noted, like reference numerals, characters, or combinations thereof denote like elements throughout the attached drawings and the written description, and thus, descriptions thereof will not be repeated. Skilled artisans will appreciate that elements in the figures are illustrated for simplicity and clarity, and have not necessarily been drawn to scale. For example, the dimensions of some of the elements, layers, and regions in the figures may be exaggerated relative to other elements, layers, and regions to help to improve clarity and understanding of various embodiments. Also, common but well-understood elements and parts not related to the description of the embodiments might not be shown to facilitate a less obstructed view of these various embodiments and to make the description clear.

In the detailed description, for the purposes of explanation, numerous specific details are set forth to provide a thorough understanding of various embodiments. It is apparent, however, that various embodiments may be practiced without these specific details or with one or more equivalent arrangements.

It will be understood that, although the terms "zeroth," "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the spirit and scope of the present disclosure.

It will be understood that when an element or component is referred to as being "on," "connected to," or "coupled to" another element or component, it can be directly on, connected to, or coupled to the other element or component, or one or more intervening elements or components may be present. However, "directly connected/directly coupled" refers to one component directly connecting or coupling another component without an intermediate component. Meanwhile, other expressions describing relationships between components such as "between," "immediately between" or "adjacent to" and "directly adjacent to" may be construed similarly. In addition, it will also be understood that when an element or component is referred to as being "between" two elements or components, it can be the only element or component between the two elements or components, or one or more intervening elements or components may also be present.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, each of the terms "or" and "and/or" includes any and all combinations of one or more of the associated listed items. For example, the expression "A and/or B" denotes A, B, or A and B.

For the purposes of this disclosure, expressions such as "at least one of," when preceding a list of elements, modify the entire list of elements and do not modify the individual elements of the list. For example, "at least one of X, Y, or Z," "at least one of X, Y, and Z," and "at least one selected from the group consisting of X, Y, and Z" may be construed as X only, Y only, Z only, or any combination of two or more of X, Y, and Z, such as, for instance, XYZ, XYY, YZ, and ZZ.

As used herein, the term "substantially," "about," "approximately," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

When one or more embodiments may be implemented differently, a specific process order may be performed differently from the described order. For example, two consecutively described processes may be performed substantially at the same time or performed in an order opposite to the described order.

Any of the components or any combination of the components described (e.g., in any system diagrams included herein) may be used to perform one or more of the operations of any flow chart included herein. Further, (i) the operations are merely examples, and may involve various additional operations not explicitly covered, and (ii) the temporal order of the operations may be varied.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the spirit and scope of the embodiments of the present disclosure.

Any of the functionalities described herein, including any of the functionalities that may be implemented with a host, a device, and/or the like or a combination thereof, may be implemented with hardware, software, firmware, or any combination thereof including, for example, hardware and/or software combinational logic, sequential logic, timers, counters, registers, state machines, volatile memories such as dynamic RAM (DRAM) and/or static RAM (SRAM), nonvolatile memory including flash memory, persistent memory such as cross-gridded nonvolatile memory, memory with bulk resistance change, phase change memory (PCM), and/or the like and/or any combination thereof, complex programmable logic devices (CPLDs), field programmable gate arrays (FPGAs), application-specific ICs (ASICs), central processing units (CPUs) including complex instruction set computer (CISC) processors and/or reduced instruction set computer (RISC) processors, graphics processing units (GPUs), neural processing units (NPUs), tensor processing units (TPUs), data processing units (DPUs), and/or the like, executing instructions stored in any type of memory. In some embodiments, one or more components may be implemented as a system-on-a- chip (SoC).

Any of the computational devices disclosed herein may be implemented in any form factor, such as 3.5 inch, 2.5 inch, 1.8 inch, M.2, Enterprise and Data Center Standard Form Factor (EDSFF), NF1, and/or the like, using any connector configuration such as Serial Advanced Technology Attachment (SATA), Small Computer System Interface (SCSI), Serial Attached SCSI (SAS), U.2, and/or the like. Any of the computational devices disclosed herein may be implemented entirely or partially with, and/or used in connection with, a server chassis, server rack, data room, data center, edge data center, mobile edge data center, and/or any combinations thereof.

Any of the devices disclosed herein that may be implemented as storage devices may be implemented with any type of nonvolatile storage media based on solid-state media, magnetic media, optical media, and/or the like. For example, in some embodiments, a storage device (e.g., a computational storage device) may be implemented as an SSD based on not-AND (NAND) flash memory, persistent memory such as cross-gridded nonvolatile memory, memory with bulk resistance change, PCM, and/or the like, or any combination thereof.

Any of the communication connections and/or communication interfaces disclosed herein may be implemented with one or more interconnects, one or more networks, a network of networks (e.g., the Internet), and/or the like, or a combination thereof, using any type of interface and/or protocol. Examples include Peripheral Component Interconnect Express (PCIe), non-volatile memory express (NVMe), NVMe-over-fabric (NVMe-oF), Ethernet, Transmission Control Protocol/Internet Protocol (TCP/IP), Direct Memory Access (DMA) Remote DMA (RDMA), RDMA over Converged Ethernet (ROCE), FibreChannel, InfiniBand, SATA, SCSI, SAS, Internet Wide Area RDMA Protocol (iWARP), and/or a coherent protocol, such as Compute Express Link (CXL), CXL.mem, CXL.cache, CXL.IO and/or the like, Gen-Z, Open Coherent Accelerator Processor Interface (OpenCAPI), Cache Coherent Interconnect for Accelerators (CCIX), and/or the like, Advanced eXtensible Interface (AXI), any generation of wireless network including 2G, 3G, 4G, 5G, 6G, and/or the like, any generation of Wi-Fi, Bluetooth, near-field communication (NFC), and/or the like, or any combination thereof.

In some embodiments, a software stack may include a communication layer that may implement one or more communication interfaces, protocols, and/or the like such as PCIe, NVMe, CXL, Ethernet, NVMe-oF, TCP/IP, and/or the like, to enable a host and/or an application running on the host to communicate with a computational device or a storage device.

Unless otherwise defined, all terms (including technical and scientific terms) used herein have the same meaning as commonly understood by one of ordinary skill in the art to which the present inventive concept belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As mentioned above, in the field of computers, a computing system may include one or more hosts and one or more memory devices, such as storage devices, connected to (e.g., communicatively coupled to) the one or more hosts. For example, a data center may perform data access management to provide computing resources of one or more hosts and/or one or more memory devices to users. The computing resources may be provided based on a plurality of interconnected nodes in the computing system. For example, a first node may include a master device (e.g., a host) and a second node may include a slave device (e.g., a controller of a storage device). The slave device may provide an interface that operates in accordance with an on-chip communication-bus protocol (e.g., AXI) for allowing access to data associated with the slave device. As used herein, an "on-chip communication-bus protocol" refers to a protocol that enables communication between components (e.g., between internet protocol (IP) blocks, devices, sub-circuits, and/or the like) of one or more integrated circuits. For example, AXI is an on-chip communication-bus protocol, which may be used as a protocol for separating a combined read-write channel into a separate read channel and a separate write channel. One of the features (e.g., key features) in the AXI protocol is separate read and write data channels. To improve data access efficiency, it may be suitable for systems to include multiple (e.g., many) read and write command queues to allow the system to change the order in which commands are executed. It may also be suitable for systems to provide data coherence between read commands and write commands associated with a same address.

Issues may arise in systems that include multiple read and write command queues. In some systems, to guarantee data coherence, one command queue (e.g., one command first-in, first-out (FIFO) queue) may be implemented to handle both read commands and write commands to provide data coherence. As used herein, "data coherence" refers to maintaining a relative order (e.g., a sequence) of executing two or more commands. For example, a first command may be a write command for adding new data to a given memory location, and a second command may be a read command for reading the new data from the given memory location. The data of the system may become incoherent if the second command (for reading data from the given memory location) is performed before the first command has written the new data to the given memory location.

Systems providing one command queue that includes both read commands and write commands may be able to provide data coherence. However, such systems may have reduced efficiency compared to other systems because each later received command that is further back in the FIFO queue may need to wait for each earlier received command to be executed before the later received command can be executed.

In some systems, to improve performance (e.g., to reduce latency), two separate command queues may be provided. For example, a first command queue may be provided to manage write commands and a second command queue may be provided to manage read commands. However, due to uneven data traffic between the two queues, a read command and a write command associated with the same memory location may be performed out of order, causing the data to become mismatched (e.g., to become incoherent).

Aspects of some embodiments of the present disclosure provide for systems and methods with improved performance and improved data coherence based on: pair checking between commands in a read queue and commands in a write queue; ensuring the execution order of same-address command pairs; and reordering later-received commands to be executed before an earlier-received command that is being held in the queue to maintain data coherence with the other half of its same-address command pair.

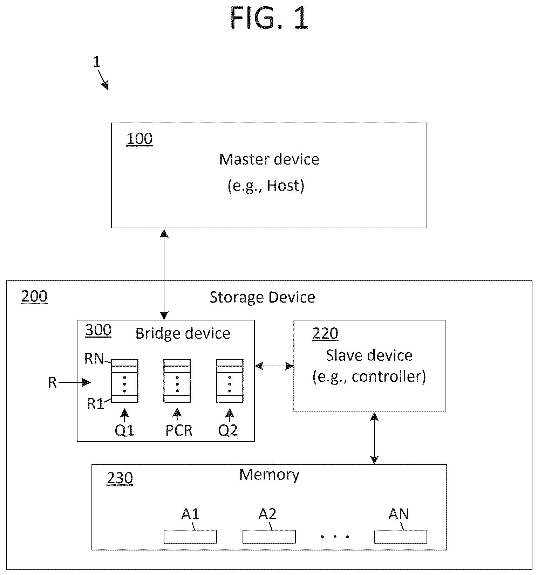

FIG. 1 is a block diagram depicting a system 1 for data access management, according to some embodiments of the present disclosure.

Referring to FIG. 1, the system 1 may include a master device 100 (e.g., an AXI master device) and a slave device 220 (e.g., an AXI slave device). In some embodiments, the master device 100 may be a host that sends data access commands (e.g., read and write commands) to the slave device 220. In some embodiments, the slave device 220 may be a controller that performs operations, associated with the data access commands, on data in a memory 230 that is communicatively coupled to the slave device 220. In some embodiments, the slave device 220 may be a volatile-memory controller (e.g., a DRAM controller) and the memory 230 may include volatile memory (e.g., may include DRAM). In some embodiments, the slave device 220 may be a non-volatile-memory controller (e.g., a NAND flash controller) and the memory 230 may include non-volatile memory (e.g., may include a NAND flash memory). The memory 230 may include memory locations identified by addresses. For example, the memory 230 may include a first address A1 (e.g., a first memory location), a second address A2 (e.g., a second memory location), and an N-th address AN (e.g., an N-th memory location).

In some embodiments, the master device 100 may be communicatively connected to the slave device 220 via a bridge device 300. The bridge device 300 may include a first queue Q1 (e.g., a first command queue, such as a read-command queue). The bridge device 300 may include a second queue Q2 (e.g., a second command queue, such as a write-command queue). In some embodiments, the first queue Q1 stores commands having a first command type (e.g., read commands) that are different from a second command type (e.g., write commands) stored in the second queue Q2. In some embodiments, the first queue Q1 may store only commands of the first command type (e.g., may store only read commands and no write commands), and the second queue Q2 may store only commands of the second command type (e.g., may store only write commands and no read commands).

The first queue Q1 and the second queue Q2 may each include N registers (e.g., a first register R1 through an N-th register RN). The bridge device 300 may include one or more pair check registers PCR. In some embodiments, the bridge device 300 may include N pair check registers PCR to equal the number of registers R in each of the first queue Q1 and the second queue Q2. In some embodiments, the bridge device 300 may be implemented in hardware. As discussed in further detail below, the bridge device 300 may be provided between the master device 100 and the slave device 220 to provide for improved performance and/or improved data coherence, based on pair checking between the first queue Q1 and the second Q2.

In some embodiments, the bridge device 300 may be located in a storage device 200. For example, the bridge device 300 may be provided as a component of the storage device 200, along with the slave device 220 and the memory 230. However, the present disclosure is not limited thereto. For example, in some embodiments, the bridge device 300 may be located in the master device 100 or may be located in a device that is external to both the master device 100 and the storage device 200.

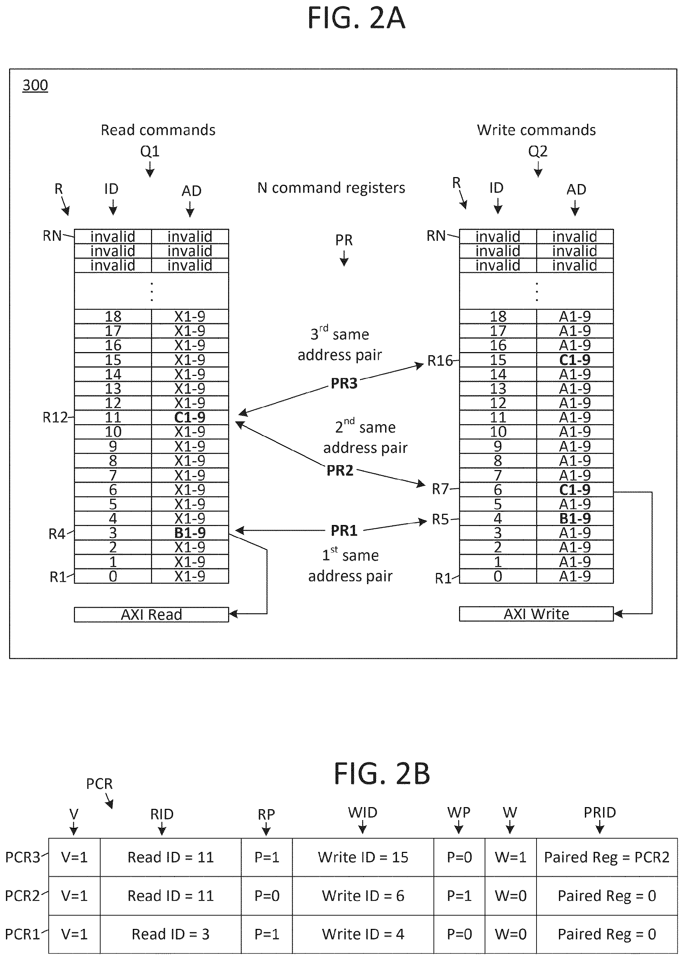

FIG. 2A is a diagram depicting a method for pair checking between command queues, according to some embodiments of the present disclosure.

FIG. 2B is a diagram depicting pair check registers PCR for performing the pair checking between command queues depicted in FIG. 2A, according to some embodiments of the present disclosure.

Referring to FIG. 2A, the bridge device 300 may include the first queue Q1 and the second queue Q2. For example, the first queue Q1 may be a read-command queue (also referred to as a read queue) and the second queue Q2 may be a write-command queue (also referred to as a write queue). Each queue may include N registers R (e.g., N command registers). Each given command in each given register R may be associated with an identifier ID. In some embodiments, the identifiers ID may be controlled by the master device 100 and applied to (e.g., assigned to) each given command. For example, in accordance with the AXI protocol, each command may have an identifier ID and may be associated with address information. For example, in AXI protocol, a read command may have (e.g., may be associated with) an ARID and an ARADDR, and a write command may have (e.g., may be associated with) an AWID and an AWADDR. The AWID may be associated with an AXI write channel and the ARID may be associated with an AXI read channel. The identifiers ID (e.g., ARID and AWID) may be controlled by a master AXI (e.g., a host) and may not indicate a relative priority for processing commands. In some embodiments, priority may be determined by a FIFO scheme unless a given command is associated with a valid pair check register PCR, as discussed in further detail below.

As depicted in FIG. 2A, the identifier ID of a command in a first register R1 of the first queue Q1 is 0, and the identifier ID of a command in a fourth register R4 of the first queue Q1 is 3. However, it should be understood that the present disclosure is not limited to having identifiers ID corresponding to an order of the registers R within a given command queue. For example, the identifiers ID may include (e.g., may be) any suitable unique identifier for distinguishing between two given commands. For example, in AXI, each command may have a unique identifier ID that is provided by the master device 100.

In some embodiments, the bridge device 300 may determine whether a given register R in the first queue Q1 and/or the second queue Q2 includes a valid command. For example, some registers R in a queue may not include a command. Registers R with no commands may be referred to as invalid. The bridge device 300 may determine (e.g., may check) whether any of the valid commands in the first queue Q1 (e.g., the read queue) and in the second queue Q2 (e.g., the write queue) are associated with (e.g., include) a same location (e.g., an address AD or range of addresses that are the same or that overlap with each other) of the memory 230 (see FIG. 1). Commands in the first queue Q1 and the second queue Q2 that are associated with a same memory location may be referred to as a pair PR (e.g., a same-address pair). The bridge device 300 may store information for managing each pair PR into pair check registers PCR (see FIG. 2B). For example, in some embodiments, the bridge device 300 may generate information (e.g., priority information) in each pair check register PCR for determining whether a read command has priority over a write command that is paired with the read command or whether the write command has priority over the read command.

In some embodiments, each pair check register PCR may include information for determining an order in which the commands of each pair are processed, with respect to each other. In some embodiments, each pair check register PCR may include information for determining an order in which the commands of each pair are processed with respect to the commands of other pair check registers PCR.

For example, in some embodiments, a first section (e.g., a validity field V) of the pair check registers PCR may include information for determining whether a given pair check register PCR includes information for a valid pair PR (e.g., information for determining whether a given pair check register PCR includes information about a given pair PR of commands). In some embodiments, a second section (e.g., a read ID field RID) may include the identifier ID of a given paired read command (e.g., a given paired read command from the first queue Q1). In some embodiments, a third section (e.g., a read priority field RP) may include information for determining whether the read command has a priority of execution over its paired write command. In some embodiments, a fourth section (e.g., a write ID field WID) may include the identifier ID of a given paired write command (e.g., a given paired write command from the second queue Q2). In some embodiments, a fifth section (e.g., a write priority field WP) may include information for determining whether the write command has a priority of execution over its paired read command. In some embodiments, the read priority field RP and the write priority field WP may be replaced by a single priority field (e.g., a single bit) indicating whether a read command or a write command has priority. For example, the value 0 may indicate that the read command has priority over the write command, and the value 1 may indicate that the write command has priority over the read command, or vice versa. In some embodiments, a sixth section (e.g., a wait field W) may include information for determining whether a given pair check register PCR is to wait for the commands associated with another pair check register PCR to be executed, before the commands of the given pair check register PCR may be executed. In some embodiments, a seventh section (e.g., a paired-register ID field PRID) of the subject pair check register PCR (e.g., PCR3 of FIG. 2B) may include an identifier ID of a second pair check register PCR (e.g., PCR2 of FIG. 2B) that has a priority of execution over the subject pair check register PCR (e.g., PCR3) In other words, the paired-register ID field PRID may contain the pair check register PCR value of a pair check register PCR containing a pair for which the subject PCR is configured to wait (e.g., for which the subject PCR should wait).

In some embodiments, the bridge device 300 (see FIG. 2A) may check for a same address in the valid commands of the queues. If there are valid commands associated with the same address, the bridge device 300 may process the commands (e.g., may send the commands for execution) in their provided order. For example, the bridge device 300 may keep the order for commands that are associated with the same address.

In some embodiments, if there are valid same-address pairs PR (e.g., in the pair check registers PCR), the bridge device 300 may change an order of execution with valid same-address pairs PR. For example, if there is no address conflict between two same-address pairs PR, each same-address pair PR may be executed independently. If there is a same address (e.g., a same address range) between two same-address pairs PR, the second same-address pair PR (e.g., the later-received same-address pair PR) may be made to wait until the execution of the first same-address pair PR (e.g., the earlier-received same-address pair PR) is finished.

In some embodiments, if there is no valid same-address pair PR, the order of execution (e.g., the original order of execution) may be maintained. For example, the commands may be executed based on a FIFO sequence.

For example, FIG. 2A depicts a scenario where the first queue Q1 and the second queue Q2 include three pairs PR (e.g., three same-address pairs). For example, the bridge device 300 may determine that: a first pair PR1 includes (i) the read command of the fourth register R4 in the first queue Q1, having a read ID of 3 and (ii) the write command of the fifth register R5 in the second queue Q2, having a write ID of 4; a second pair PR2 includes (i) the read command of the twelfth register R12 in the first queue Q1, having a read ID of 11 and (ii) the write command of the seventh register R7 in the second queue Q2, having a write ID of 6; and a third pair PR3 includes (i) the read command of the twelfth register R12 in the first queue Q1, having the read ID of 11 and (ii) the write command of the sixteenth register R16 in the second queue Q2, having a write ID of 15.

Referring to FIG. 2B, three pair check registers PCR may be populated for providing information for each of the first pair PR1, the second pair PR2, and the third pair PR3. For example, a first pair check register PCR1 may include information regarding the first pair PR1. For example, the validity field V may be populated, initially, with a 0 (indicating that the first pair check register PCR1 does not include a valid pair PR) and may be changed to be populated with a 1 to indicate that the first pair check register PCR1 includes information for a valid pair PR (e.g., the first pair PR1). The read ID field RID may indicate the read ID of 3 and the write ID field WID may indicate the write ID of 4. The read priority field RP may indicate a 1 to indicate that the read command has a priority of execution over the write command. The write priority field WP may indicate a 0 to indicate that the write command does not have the priority of execution over the read command. The wait field W may indicate a 0 to indicate that the first pair PR1 does not have any overlapping memory locations (e.g., does not have any conflicting addresses) with any other pairs PR (e.g., any earlier-received pairs PR). The paired-register ID field PRID may be populated with a 0 based on the wait field W indicating a 0.

A second pair check register PCR2 may include information regarding the second pair PR2. For example, the validity field V may be populated, initially, with a 0 (indicating that the second pair check register PCR2 does not include a valid pair PR) and may be changed to be populated with a 1 to indicate that the second pair check register PCR2 includes information for a valid pair PR (e.g., the second pair PR2). The read ID field RID may indicate the read ID of 11 and the write ID field WID may indicate the write ID of 6. The read priority field RP may indicate a 0 to indicate that the read command does not have a priority of execution over the write command. The write priority field WP may indicate a 1 to indicate that the write command has the priority of execution over the read command. The wait field W may indicate a 0 to indicate that the second pair PR2 does not have any overlapping memory locations (e.g., does not have any conflicting addresses) with any other pairs PR (e.g., any earlier-received pairs PR, such as the first pair PR1). The paired-register ID field PRID may be populated with a 0 based on the wait field W indicating a 0.

A third pair check register PCR3 may include information regarding the third pair PR3. For example, the validity field V may be populated, initially, with a 0 (indicating that the third pair check register PCR3 does not include a valid pair PR) and may be changed to be populated with a 1 to indicate that the third pair check register PCR3 includes information for a valid pair PR (e.g., the third pair PR3). The read ID field RID may indicate the read ID of 11 and the write ID field WID may indicate the write ID of 15. The read priority field RP may indicate a 1 to indicate that the read command has a priority of execution over the write command. The write priority field WP may indicate a 0 to indicate that the write command does not have the priority of execution over the read command. The wait field W may indicate a 1 to indicate that the third pair PR3 has overlapping memory locations (e.g., has a conflicting address) with another pair PR (e.g., an earlier-received pair PR, such as the second pair PR2). The paired-register ID field PRID may be populated with information for identifying the conflicting earlier-received pair PR. For example, the paired-register ID field PRID of the third pair check register PCR3 may be populated with information identifying the second pair check register PCR2 as including information for a conflicting pair PR that has a priority of execution over the commands of the third pair PR3.

Referring again to FIG. 2A, the bridge device 300 may ensure data coherency based on the information associated with the pair check registers PCR. For example, when the read command having the read ID of 3 is sent, by the bridge device 300, for execution by the slave device 220 (see FIG. 1), the bridge device 300 may place a hold on the write command having the write ID of 4, such that the write command having the write ID of 4 is retained in the second queue Q2 until the read command having the read ID of 3 is finished being executed. In other words, the write command having the write ID of 4 may be retained in the second queue Q2 (e.g., may not be executed), based on the read command having the read ID of 3 being executed (e.g., based on the execution of the read command having the read ID of 3 not being completed). Accordingly, data coherence may be enabled by the bridge device 300 ensuring that the order of operations between same-address pairs in the read queue and the write queue is maintained.

In some embodiments, to improve efficiency, the bridge device 300 may reorder one or more commands that do not involve a same address as a same-address pair that is currently involved in execution. For example, if the read command having the read ID of 3 has not been completed and the write command having the write ID of 4 is at the front of the second queue Q2 to be sent for execution, the bridge device 300 may send a write command that is further back in the second queue Q2 (e.g., the write command having the write ID of 5) to be executed ahead of the write command having the write ID of 4, due to the write command having the write ID of 4 being placed on hold (e.g., placed on hold pending the execution of the read command having the read ID of 3).

When the write command having the write ID of 6 is sent, by the bridge device 300, for execution by the slave device 220 (see FIG. 1), the bridge device 300 may place a hold on the read command having the read ID of 11, such that the read command having the read ID of 11 is retained in the first queue Q1 until the write command having the write ID of 6 has finished being executed. In other words, the read command having the read ID of 11 may be retained in the first queue Q1 (e.g., may not be executed), based on the write command having the write ID of 6 being executed (e.g., based on the execution of the write command having the write ID of 6 not being completed). Accordingly, and as discussed above, data coherence may be enabled by the bridge device 300 ensuring that the order of operations between same-address pairs in the read queue and the write queue is maintained.

When the read command having the read ID of 11 is sent, by the bridge device 300, for execution by the slave device 220 (see FIG. 1), the bridge device 300 may place a hold on the write command having the write ID of 15, such that the write command having the write ID of 15 is retained in the second queue Q2 until the read command having the read ID of 11 has finished being executed. In other words, the write command having the write ID of 15 may be retained in the second queue Q2 (e.g., may not be executed), based on the read command having the read ID of 11 being executed (e.g., based on the execution of the read command having the read ID of 11 not being completed). Accordingly, and as discussed above, data coherence may be enabled by the bridge device 300 ensuring that the order of operations between same-address pairs in the read queue and the write queue is maintained.

In some embodiments, because the third pair check register PCR3 includes a wait field W populated with a 1 and a paired-register ID field PRID indicating that the commands of the second pair check register PCR2 have a priority of execution over the commands of the third pair check register PCR3. Based on the information associated with the wait field W and/or the paired-register ID field PRID, the bridge device 300 may prevent the write command having the write ID of 15 from being reordered for execution ahead of the write command having the write ID of 6.

In some embodiments, to improve efficiency, the bridge device 300 may reorder one or more commands that do not involve a same address as a same-address pair that is currently involved in execution. In other words, re-ordering commands may include re-ordering both paired and non-paired commands. For example, if the read command having the read ID of 11 has not been completed and the write command having the write ID of 15 is at the front of the second queue Q2 to be sent for execution, the bridge device 300 may send a write command that is further back in the second queue Q2 (e.g., the write command having the write ID of 16) to be executed ahead of the write command having the write ID of 15, due to the write command having the write ID of 15 being placed on hold (e.g., placed on hold pending the execution of the read command having the read ID of 11). That is, a default ordering (e.g., a basic ordering) of the commands may be determined on a first-come, first-served basis (e.g., based on a time of receipt), except for valid pair check registers PCR.

It should be understood that aspects of embodiments of the present disclosure allow for data coherence regardless of whether one queue (e.g., Q1) has more commands than the other queue (e.g., Q2) when a given pair PR is received and regardless of whether some of the commands of one queue (e.g., Q1) are processed more quickly than the commands of the other queue (e.g., Q2). For example, if the queues Q1 and Q2 start empty and 10 read commands (e.g., read requests) are received but no write commands are initially received, the read command queue Q1 would have registers R1-R10 occupied with read identifiers ID 0 to 9. Then, if a read-before-write pair PR comes in (e.g., having a read priority), the read command (e.g., having an identifier ID of 10) would occupy (e.g., would be stored in) register R11 of Q1, and the write command (e.g., having an identifier of 0) would occupy register R1 of Q2. After receiving the read command with the identifier ID of 10, the read command with the identifier ID of 10 would go to AXI read (e.g., would be executed before the write command having the identifier of 0) based on information in a corresponding priority check register PCR indicating that the read command has priority over the write command having the identifier ID of 0. The write command having the identifier ID of 0 would not be executed until the read command with the identifier ID of 10 has finished being executed.

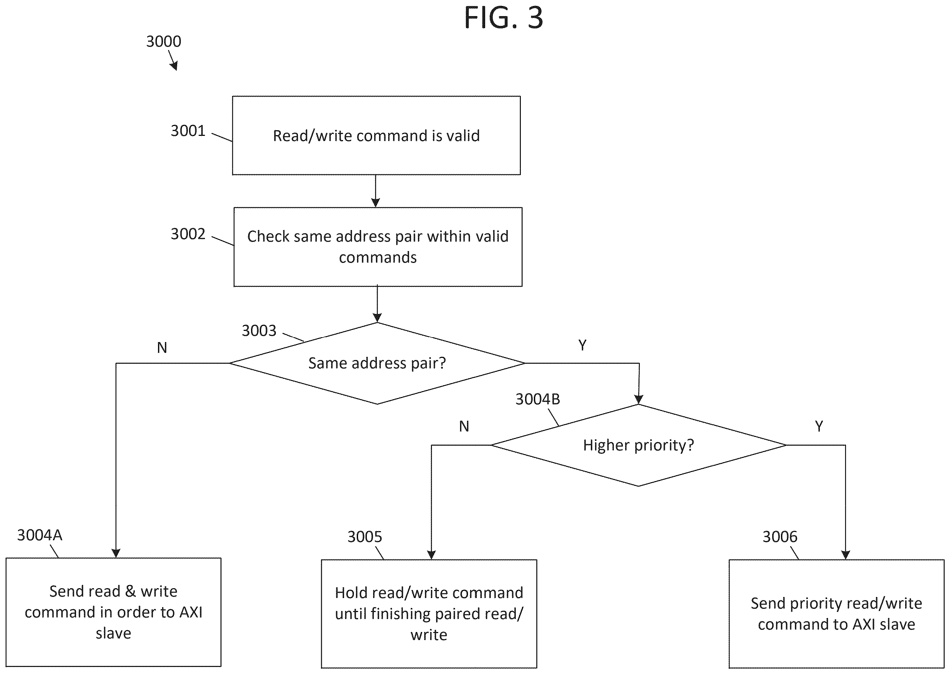

FIG. 3 is a block diagram depicting a method 3000 for data access management with operations for processing commands with no same-address pair and operations for processing commands with a same-address pair, according to some embodiments of the present disclosure.

Referring to FIG. 3, the method 3000 may include one or more of the following operations. In some embodiments, the bridge device 300 may determine that a command is valid (e.g., operation 3001). For example, the bridge device 300 may determine that a new command (e.g., a new valid read command or a new valid write command) has been received by a queue (e.g., the first queue Q1 or the second queue Q2 of FIG. 2A). The bridge device 300 may check for same-address pairs within the valid commands (e.g., within the valid commands of the first queue Q1 and/or the second queue Q2) (operation 3002). The bridge device 300 may determine whether any of the previously received commands (e.g., previously received valid commands) include a same memory location (e.g., a same memory address) as the new command (e.g., the new read command or the new write command, as the case may be) (operation 3003).

Based on determining, by the bridge device 300, that none (N) of the previously received commands in the command queues are associated with the same memory location as the new command, the bridge device 300 may send the read and write commands in order to the slave device 220 for executing the operations associated with each command (operation 3004A).

Based on determining, by the bridge device 300, that one or more of the previously received commands in the command queues are associated with the same memory location as the new command (Y), the bridge device 300 may generate (e.g., populate) information for the new command and the previously received command associated with the same address into a pair check register PCR and may check the priorities (e.g., the read priority field RP and the write priority field WP) in the valid pair check registers PCR for determining an order of execution of the commands (operation 3004B). For example, the bridge device 300 may generate priority information into a given pair check register PCR and may determine (e.g., may later determine) which command of the pair of commands identified by the given pair check register PCR has a higher priority.

As discussed above, if a priority field (e.g., the read priority field RP or the write priority field WP) indicates that a first given command of a pair check register PCR does not have a priority of execution (N) over a second given command of the pair check register PCR (e.g., if the priority field indicates a 0), then the bridge device 300 may hold the first given command in its respective queue until its paired second given command is finished being executed (operation 3005). If a priority field indicates that a first given command of a pair check register PCR has the priority of execution (Y) over a second given command of the pair check register PCR (e.g., if the priority field indicates a 1), then the bridge device 300 may send the priority command to the slave device 220 to be executed before its paired second given command (operation 3006). The process of checking priority fields in valid pair check registers PCR may be repeated for each valid pair check register PCR.

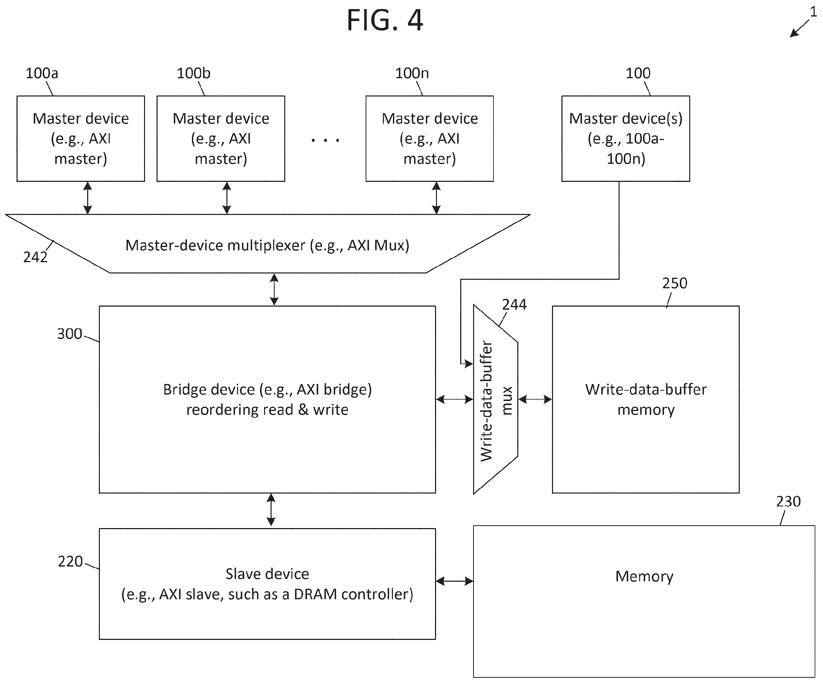

FIG. 4 is a block diagram depicting a system for data access management with multiplexing and a write-data-buffer memory 250, according to some embodiments of the present disclosure.

Referring to FIG. 4, and as discussed above, the bridge device 300 may be implemented as a bridge (e.g., an AXI bridge) to provide read and write data coherence in the system 1. In some embodiments, one or more master devices 100 (e.g., AXI master devices) may send read and write commands as inputs to a master-device multiplexer 242 (e.g., an AXI multiplexer). The bridge device 300 may receive a multiplexed output from the master-device multiplexer 242. In some embodiments, one or more of the master devices 100 may send write data, for processing with one or more write commands. In some embodiments, AXI write data may be stored in the write-data-buffer memory 250 through an AXI write channel. In some embodiments, a given master device 100 may store AXI write data directly to write data buffer memory 250.

In some embodiments, one or more master devices 100 may send write data to a write-data-buffer memory 250 via a write-data-buffer multiplexer 244. The write-data-buffer memory 250 may store the write data associated with the write commands. The bridge device 300 may ensure data coherency based on pair checking between command queues, as discussed above, and may receive and process write data from the write-data-buffer memory 250, along with corresponding write commands in the write queue. The bridge device 300 may send the read and write commands and the write data, when suitable, to the slave device 220 for performing operations at the memory 230.

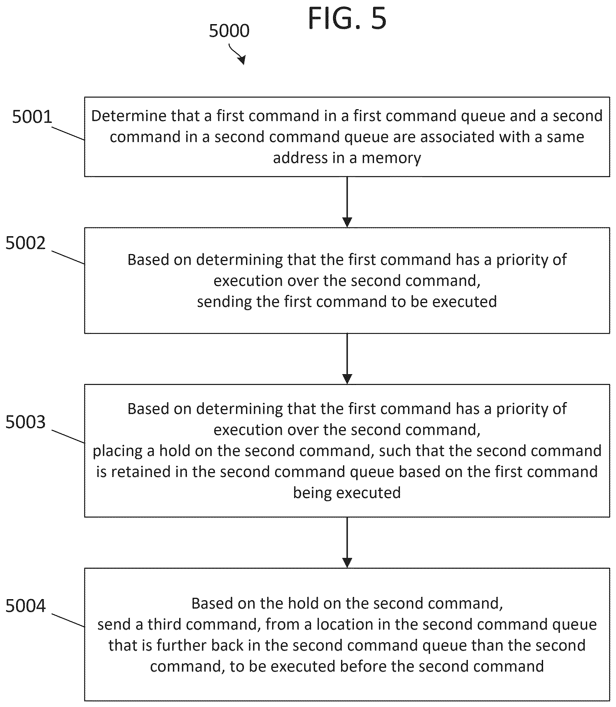

FIG. 5 is a diagram depicting a method for data access management with determination operations for pair checking between command queues, according to some embodiments of the present disclosure.

Referring to FIG. 5, the method 5000 may include one or more of the following operations. A device (e.g., the bridge device 300) may determine that a first command in a first command queue (e.g., a read command in the first queue Q1 of FIG. 2A) and a second command in a second command queue (e.g., a write command in the second queue Q2 of FIG. 2A) are associated with a same memory location (e.g., a same address in the memory 230 of FIGS. 1 or 4) (operation 5001). Based on determining, by the bridge device 300, that the read command has a priority of execution over the write command, the bridge device 300 may send the read command to be executed (operation 5002). Also based on determining, by the bridge device 300, that the read command has the priority of execution over the write command, the bridge device 300 may place a hold on the write command, such that the second command is retained in the second queue Q2 until the read command is finished being executed (operation 5003). Based on the write command being placed on hold, the bridge device 300 may reorder the commands of the second queue Q2 by sending a write command that is further back in the second queue Q2 to be executed before the write command that is placed on hold (operation 5004).

Accordingly, aspects of some embodiments of the present disclosure may provide improvements to data access management by ensuring data coherence through the proper ordering of the execution of same-address pairs. Aspects of some embodiments of the present disclosure may provide improvements to data access management by improving performance (e.g., decreasing latencies) by reordering commands in a command queue when an earlier command in the queue is on hold for data coherency purposes.

Example embodiments of the disclosure may extend to the following statements, without limitation:
Statement 1. An example method includes determining, by a device, that a first command in a first command queue of the device and a second command in a second command queue of the device are associated with a same address in a memory, the first command queue being configured to store a command type different from that of the second command queue, determining that the first command has a priority of execution over the second command, sending, by the device, the first command to be executed, and placing, by the device, a hold on the second command, such that the second command is retained in the second command queue based on the first command being executed.
Statement 2. An example method includes the method of statement 1, and further includes sending, by the device, a third command from the second command queue to be executed, the third command being further back in the second command queue than the second command.
Statement 3. An example method includes the method of statements 1 and 2, wherein the sending the first command to be executed includes sending, by the device, the first command to a slave device via an on-chip communication-bus protocol, and wherein the on-chip communication-bus protocol is an advanced extensible interface (AXI) protocol.
Statement 4. An example method includes the method of any of statements 1-3, wherein the memory includes a volatile memory or a non-volatile memory, and the slave device includes a controller associated with one of the volatile or non-volatile memories.
Statement 5. An example method includes the method of any of statements 1-4, wherein the command type is one of a read command or a write command.
Statement 6. An example method includes the method of any of statements 1-5, wherein the first command includes a first read command, the first command queue includes a read-command queue, the second command includes a first write command, and the second command queue includes a write-command queue.
Statement 7. An example method includes the method of any of statements 1-5, wherein the first command includes a first write command, the first command queue includes a write-command queue, the second command includes a first read command, and the second command queue includes a read-command queue.
Statement 8. An example method includes the method of any of statements 1-7, and further includes generating, by the device, priority information in a register, the register including an identifier for the first command and an identifier for the second command, wherein the determining that the first command has the priority of execution over the second command includes reading, by the device, the priority information from the register.
Statement 9. An example method includes the method of any of statements 1-7, and further includes determining, by the device, that a fourth command in the first command queue of the device and a fifth command in the second command queue of the device are also associated with the same address in the memory, and determining, by the device, that the first command and the second command have a higher priority of execution based on a field of a register, the register including information associating the fourth command with the fifth command.
Statement 10. An example method includes the method of any of statements 1-9, and further includes determining, by the device, that the first command and the second command are valid commands and generating a validity determination, wherein the device performs the determining that the first command and the second command are associated with the same address based on the validity determination.
Statement 11. An example system for performing the method of any of statements 1-10 includes the device, as a bridge device, connected to a master device and to the slave device, and the controller of the slave device communicatively coupled to the bridge device.

While embodiments of the present disclosure have been particularly shown and described with reference to the embodiments described herein, it will be understood by those of ordinary skill in the art that various changes in form and details may be made therein without departing from the scope of the appended claims.

## Claims

1. A method for data access management, the method comprising:
determining (5001), by a device (300), that a first command in a first command queue (Q1) of the device (300) and a second command in a second command queue (Q2) of the device (300) are associated with a same address in a memory (230), the first command queue (Q1) being configured to store a command type different from that of the second command queue (Q2);
determining that the first command has a priority of execution over the second command;
sending (5002), by the device (300), the first command to be executed; and
placing (5003), by the device (300), a hold on the second command, such that the second command is retained in the second command queue (Q2) based on the first command being executed.

2. The method of claim 1, further comprising:
sending, by the device (300), a third command from the second command queue (Q2) to be executed, the third command being further back in the second command queue (Q2) than the second command.

3. The method of claim 1 or 2, wherein the sending the first command to be executed comprises:
sending, by the device (300), the first command to a slave device via an on-chip communication-bus protocol, and
wherein the on-chip communication-bus protocol is an advanced extensible interface, AXI, protocol.

4. The method of any one of claims 1 to 3, further comprising:
generating, by the device (300), priority information in a register (PCR), the register (PCR) comprising an identifier for the first command and an identifier for the second command,
wherein the determining that the first command has the priority of execution over the second command comprises:
reading, by the device (300), the priority information from the register (PCR).

5. The method of any one of claims 1 to 4, further comprising:
determining, by the device (300), that a fourth command in the first command queue (Q1) of the device (300) and a fifth command in the second command queue (Q2) of the device (300) are also associated with the same address in the memory (230); and
determining, by the device (300), that the first command and the second command have a higher priority of execution based on a field of a register (PCR), the register (PCR) comprising information associating the fourth command with the fifth command.

6. The method of any one of claims 1 to 5, further comprising:
determining, by the device (300), that the first command and the second command are valid commands and generating a validity determination,
wherein the device (300) performs the determining that the first command and the second command are associated with the same address based on the validity determination.

7. A system comprising:
a bridge device (300) connected to a master device and to a slave device; and
a controller of the slave device communicatively coupled to the bridge device, wherein the bridge device (300) is configured to perform:
determining that a first command in a first command queue (Q1) of the bridge device (300) and a second command in a second command queue (Q2) of the bridge device (300) are associated with a same address in a memory (230) associated with the controller, the first command queue (Q1) being configured to store a command type different from that of the second command queue (Q2);
determining that the first command has a priority of execution over the second command;
sending the first command to be executed; and
placing a hold on the second command, such that the second command is retained in the second command queue (Q2) based on the first command being executed.

8. The system of claim 7, wherein the bridge device (300) is configured to perform:
sending a third command from the second command queue (Q2) to be executed, the third command being further back in the second command queue (Q2) than the second command.

9. The system of claim 7 or 8, wherein the sending the first command to be executed comprises:
sending, by the bridge device (300), the first command to the controller via an on-chip communication-bus protocol, and
wherein the on-chip communication-bus protocol is an advanced extensible interface, AXI, protocol.

10. The system of any one of claims 7 to 9, wherein the command type is one of a read command or a write command.

11. The system of any one of claims 7 to 10, wherein:
the memory (230) comprises a volatile memory or a non-volatile memory; and
the controller is associated with the volatile memory or the non-volatile memory.

12. The system of any one of claims 7 to 11, wherein:
the first command comprises a first read command;
the first command queue (Q1) comprises a read-command queue;
the second command comprises a first write command; and
the second command queue (Q2) comprises a write-command queue.

13. The system of any one of claims 7 to 11, wherein:
the first command comprises a first write command;
the first command queue (Q1) comprises a write-command queue;
the second command comprises a first read command; and
the second command queue (Q2) comprises a read-command queue.

14. The system of any one of claims 7 to 13, wherein the bridge device (300) is configured to perform generating priority information in a register (PCR), the register (PCR) comprising an identifier for the first command and an identifier for the second command, and
wherein the determining that the first command has the priority of execution over the second command comprises reading the priority information from the register (PCR).

15. The system of any one of claims 7 to 14, wherein the bridge device (300) is configured to perform:
determining that a fourth command in the first command queue (Q1) of the bridge device (300) and a fifth command in the second command queue (Q2) of the bridge device (300) are also associated with the same address in the memory (230); and
determining, by the bridge device (300), that the first command and the second command have a higher priority of execution based on a field of a register (PCR), the register (PCR) comprising information associating the fourth command with the fifth command.
